# EUROPEAN PATENT SPECIFICATION

(11) **EP 2 362 678 B1**
(45) Date of publication and mention of the grant of the patent: **26.07.2017**
(21) Application number: 10154525.9
(22) Date of filing: 24.02.2010
(51) Int. Cl.: H04R 1/10, H04B 1/38, H04M 1/60, H04M 1/05, H04R 5/027, H04R 5/033

(54) **A headset system with microphone for ambient sounds**
Headset-System mit Mikrofon für Umgebungsgeräusche
Système de casque doté d'un microphone pour les sons ambiants

(43) Date of publication of application: 31.08.2011
(73) Proprietor: GN Audio A/S, 2750 Ballerup (DK)
(72) Inventor: Weis, Peter, 3450, Allerød (DK)
(74) Representative: Zacco Denmark A/S

(56) References cited:
- WO-A1-2008/002266
- WO-A2-2008/138349
- US-A1- 2001 046 304
- US-A1- 2003 118 197

## Description

### Technical Field

The invention relates to a communication headset system according to the preamble of claim 1.

### Background Art

Headsets for two-way communication become more and more popular. They are used in different setups, e.g. plain corded headsets connected to desk top phones, corded headsets in call centers, wireless office headsets following the DECT standard, corded and wireless Bluetooth headsets used with mobile phones. In these years, "unified communication" (UC) becomes more prevalent. Unified communication is the integration of real-time communication services such as instant messaging, presence information, IP telephony, video conferencing, call control and speech recognition with non real-time communication services such as unified messaging (integrated voicemail, e-mail, SMS and fax). This means, that more people will use headsets more often and in longer periods during the day. One of the main advantages by using a headset is that the user's hands are free during conversation for other purposes such as typing, handling papers etc. Especially when using a wireless headset, the user can walk around the office or go to a quite room in order not to disturb colleagues during long phone calls.

However, there is a disadvantage of wearing a headset. The earphone is more or less blocking out external sounds, which can be undesirably in certain situations.

US 2001/0046304 discloses a headset with selective acoustical isolation from the external environment. The earphone sound listened to may be attenuated temporarily in the event of a certain external sound captured by a microphone. The external sound is amplified and directed to the speaker in what is termed a "hearthrough mode".
WO 2007/085307 discloses an earphone with a through going channel, which can be in a closed state and an open state. In the open state, ambient sounds can pass through. The earphone may be configured to switch the channel to the closed state when speaking on the phone.
WO 2007/102047 discloses a headset with an ambient sound microphone. A processor combines ambient sound with audio from an electronic audio device.
WO 2008/051631 also discloses a headset with an ambient sound microphone. In normal use, the user hears a mix between audio from a connected device and the ambient sound. The ambient sound is switched off or disabled when a "predefined event" is detected.

US 2003/0118197 discloses a headset with a voice microphone on a boom, an ambient sound microphone on the earphone and a transceiver attached to the headband of the headphones. The headset user can switch between different modes of operation.

WO 2008/002266 discloses a headset with two earpieces and a throat microphone to record the wearer's voice signal. Each earpiece has a microphone to detect ambient sound.

WO 2008/138349 discloses earphones with microphones to detect ambient sound. The user selects different listening or operation modes.

US 2001/0046304 discloses a system to control what sound is relayed to loudspeakers in headsets, where the headset has microphones to detect ambient noise. As indicated above, the prior art disclose different solutions for avoiding the disadvantages of headsets blocking out ambient sounds, but there is still a need for a simple and reliable solution.

### Disclosure of Invention

The invention provides a communication headset system for connecting to a two-way communication device, as described in claim 1. With such a system, the user can simply switch between the ambient mode, in which he is not isolated from the ambient sounds, and the communication mode, in which he can concentrate on speak and hear sounds coming from the two-way communication device with minimum disturbance from the surroundings.
According to an embodiment, the control circuit is adapted to transmit an output signal comprising the voice signal to the two-way communication device in the communication mode.
Preferably, a user interface is provided for switching between the ambient mode and the communication mode. Thus, the user can select between the two modes.
According to a preferred embodiment, the control circuit is adapted to automatically enter the communication mode, when it receives an input signal from the two-way communication device. Thus, the user does not to have to manually select mode, when e.g. a phone calla is accepted or ended.
The invention is especially advantageous, if the headset system comprises a first earphone and a second earphone, as such a headset system blocks out ambient sound from both ears.
The first earphone and the second earphone may be interconnected by a headband or a neckband.
According to an embodiment, the communication headset system comprises a headset housing, which comprises the ambient microphone.
According to an embodiment, the headset housing may be separate from the earphones.

Thus, the headset housing can be a body worn housing. In this case, the ambient microphone can be arranged a far distance from the user's mouth thereby catching the ambient sounds without the user's own voice becoming too predominating.

According to another embodiment, the headset housing is a headset base adapted to be placed on a surface, such as a desktop or a wall, during use. Also, in this case, the ambient microphone can be arranged at a suitable distance from the user's mouth.

According to yet another embodiment, an earphone comprises the ambient microphone.

In a specific embodiment, each of the first earphone and the second earphone comprises an ambient microphone. Such a configuration can be used for providing a spatial effect. Thus, the user's right ear hear ambient sound picked up by the ambient microphone on the right earphone while the user's left ear hear the ambient sound picked up by the ambient microphone on the left earphone.

The voice microphone may be arranged on a microphone boom in order to bring it closer to the user's mouth during use.

According to an embodiment, the control circuit is adapted to add the voice signal to the speaker signal in the communication mode. Hereby, the user can hear his own voice during two-way communications, and this feature is referred to as the "sidetone" effect.

The ambient microphone is preferably omnidirectional.

### Brief Description of the Drawings

The invention is explained in detail below with reference to the drawing illustrating a preferred embodiment of the invention and in which
Fig. 1 is a view of a communication headset system according to the invention,
Fig. 2 a view of a communication headset,
Fig. 3 is a view a third embodiment of a communication headset,
Fig. 4 is a view a communication headset,
Fig. 5 is a schematic diagram in ambient mode,
Fig. 6 is a schematic diagram in communication mode,
Fig. 7 is a state machine showing the two states of the headset system according to the invention,
Fig. 8 is a schematic diagram of a ambient mode, and
Fig. 9 is a schematic view of the headset in ambient mode.

### Modes for Carrying out the Invention

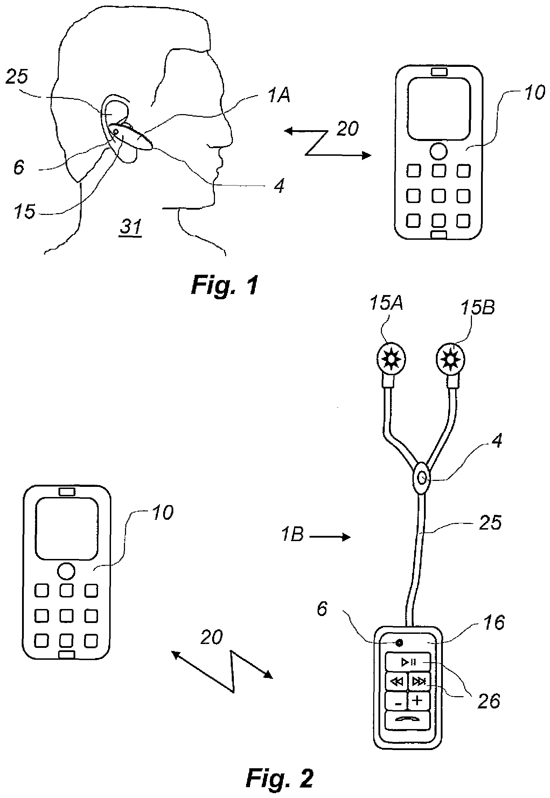

Figure 1 discloses a headset system 1A. This is based on a conventional Bluetooth headset, which is especially intended for use with Bluetooth enabled mobile phones. It comprises an earphone 15, which is arranged at the outer ear 25 of a user 31. In this embodiment, the earphone 15 is attached by inserting a non-visible earbud in the ear. However, other attachment devices, such as an ear hook, ear loop, a headband, could be used. A Bluetooth transceiver in the earphone 15 is wirelessly connected by a Bluetooth link 20 to a Bluetooth transceiver in a mobile phone 10. The earphone housing is elongate and points in the direction of the mouth of the user 31. At the end of the earphone 15 closest to the mouth, the earphone 15 is provided with a conventional voice microphone 4 for picking up the user's voice during two-way communication via the mobile phone 10. At the opposite end of the earphone 15, an ambient microphone 6 is provided for picking up ambient sounds, when the user 31 is not on a phone call.

Figure 2 discloses a headset system 1B. Two earphones 15A, 15B to be inserted into the ears of the user are connected by a wire 25 to a so-called body worn headset housing 16. A voice microphone 4 is provided as a "soap on the rope" between the earphones 15A, 15B and the housing 16. The housing 16 comprises a Bluetooth transceiver, control circuit, headset buttons 26 and an ambient microphone 6. The headset system 1B is wirelessly connected to a mobile phone 10 via a Bluetooth link 20.

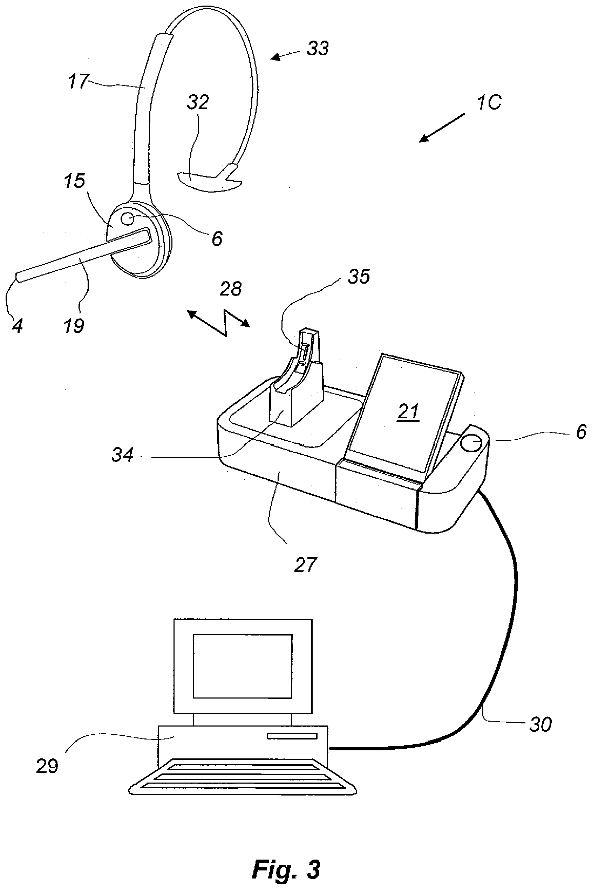

Figure 3 discloses a headset system 1C. This headset system 1C is designed for office use. It comprises a wireless headset 33 and a corresponding headset base 27. The headset system 1C is following the DECT standard and the headset 33 and the headset base 27 each comprise a DECT transceiver, whereby they during use are interconnected by a DECT link 28. The headset 33 comprises a headband 17 with an earphone 15 at one end and an end piece 32 at the other end. A microphone boom 19 extends from the earphone 15 in the direction of the user's mouth during use, and a voice microphone 4 is provided at the free end of the microphone boom 19. An ambient microphone 6 is provided on the earphone 15. The headset base 27 is adapted to stand on a desktop and comprises a headset cradle 34 with charging contacts 35 for receiving the headset 33, when this is not in use. The headset base 27 furthermore comprises a touch display 21 as user interface. The headset base 27 is by means of a cord 30 connected to a desktop computer 29 which is connected to the Internet and includes appropriate telephony software.

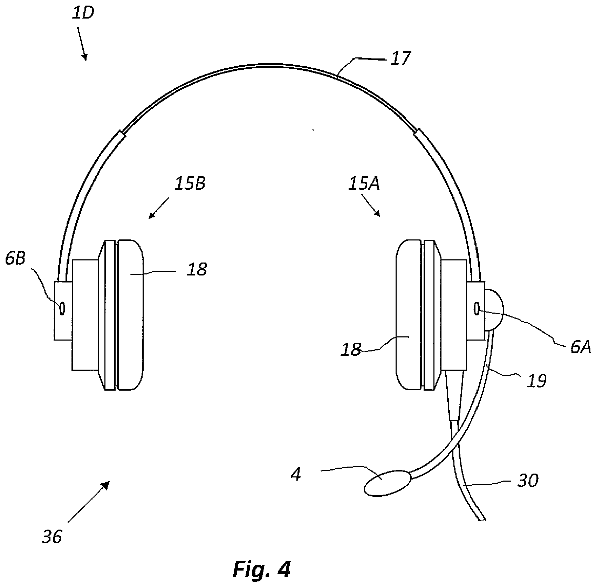

Figure 4 discloses a headset system 1D. The headset system 1D comprises a corded headset 36 with two earphones 15A, 15B that are interconnected by a headband 17. Each earphone 15A, 15B comprises an ear pad 18 for enhancing the user comfort and blocking out ambient sounds during two-way communication. A cord 30 extends from the first earphone 15A to a not-shown desktop phone. Also, a microphone boom 19 with a voice microphone 4 at the free end extends from the first earphone 15A. The housing of the first earphone 15A comprises a first ambient microphone 6A and the housing of the second earphone 15B comprises a second ambient microphone 6B. During telephone conversations the ambient microphones 6A, 6B are switched off so that the user only hears ambient noise, which is picked up by the voice microphone 4. When the user is not on a call, the voice microphone 4 is switched off while the ambient microphones 6A, 6B are switched on whereby the user is not acoustically isolated from the surroundings. Sound from the first ambient microphone 6A is directed to the speaker of the first earphone 15A, and sound from the second ambient microphone 6B is directed to the speaker of the second earphone 15B. Thus, the user experiences a spatial effect, whereby he is able to hear form which direction ambient sounds are coming.

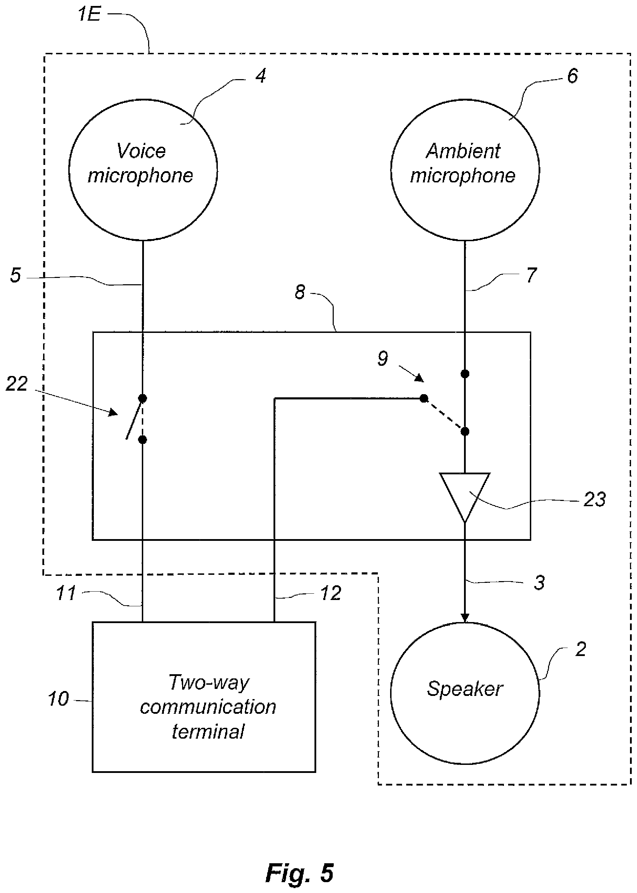

Figure 5 is a diagram schematically showing parts of the headset system 1E. The headset system 1E comprises a voice microphone 4, an ambient microphone 6, a speaker 2 and a control circuit 8. The control circuit 8 receives a voice signal 5 from the voice microphone 4 and an ambient sound signal 7 from the ambient microphone 6. A speaker signal 3 is directed from the control circuit 8 to the speaker 2. The control circuit 8 is also connected to a two-way communication terminal 10, such as a desktop phone, mobile phone or soft phone. Thus, the control circuit 8 sends an output signal 11 comprising the voice signal 5 to the two-way communication terminal 10 and receives an input signal 12 from the two-way communication terminal 10. A voice signal switch 22 is provided to switch on and off the voice signal to/from the output signal 11. A mode switch 9 is provided for switching the headset system 1E between an ambient mode in which the speaker signal 3 comprises the ambient sound signal 7 and not the input signal 12 and a communication mode in which the speaker signal 3 comprises the input signal 12 and not the ambient sound signal 7. Thus, in the ambient mode, the user can hear ambient sounds picked up by the ambient microphone 6 only, and in the communication mode, the user can hear the input signal 12 coming from the two-way communication terminal 10 only. The switching can be manual or automatic. When manual, the user can f. ex. press a button on the headset to change mode, and when automatic, the communication mode is automatically selected when there is an input signal 12 from the two-way communication terminal 10. A speaker amplifier 23 is provided to amplify the speaker signal 3 to an suitable level. In figure 5, the headset system 1E is in the ambient mode. The voice signal switch 22 is operatively connected to the mode switch 9, so that the voice signal 5 is automatically switched off from the output signal 11, when the headset system 1E is in the ambient mode.

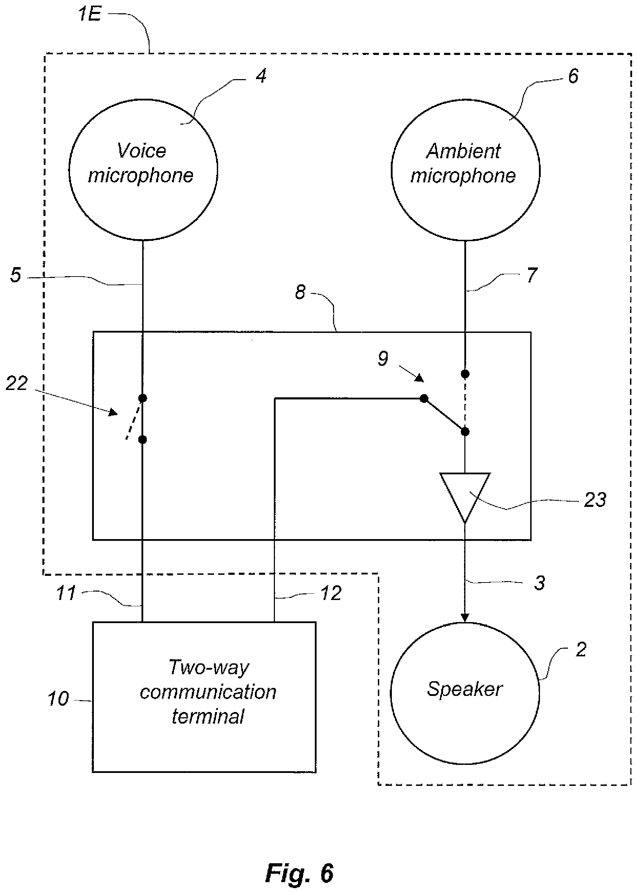

Figure 6 discloses the headset system 1E in the communication mode.

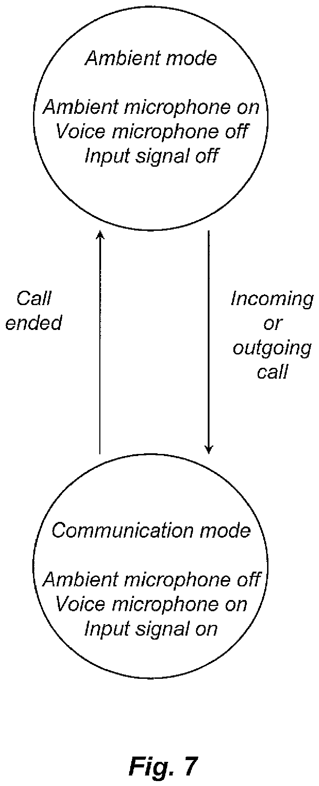

Figure 7 is a state machine showing the two states or modes of the headset system 1 according to the invention. In the uppermost ambient mode, the ambient microphone is switched on, while the voice microphone and the input signal are switched off. In the lowermost communication mode, the ambient microphone is switched off while the voice microphone and the input signal are switched on. The left arrow indicates that the headset system switches from communication mode to ambient mode when a call is ended. The right arrow indicates that the headset system switches from ambient mode to communication mode, when there is an incoming or outgoing call.

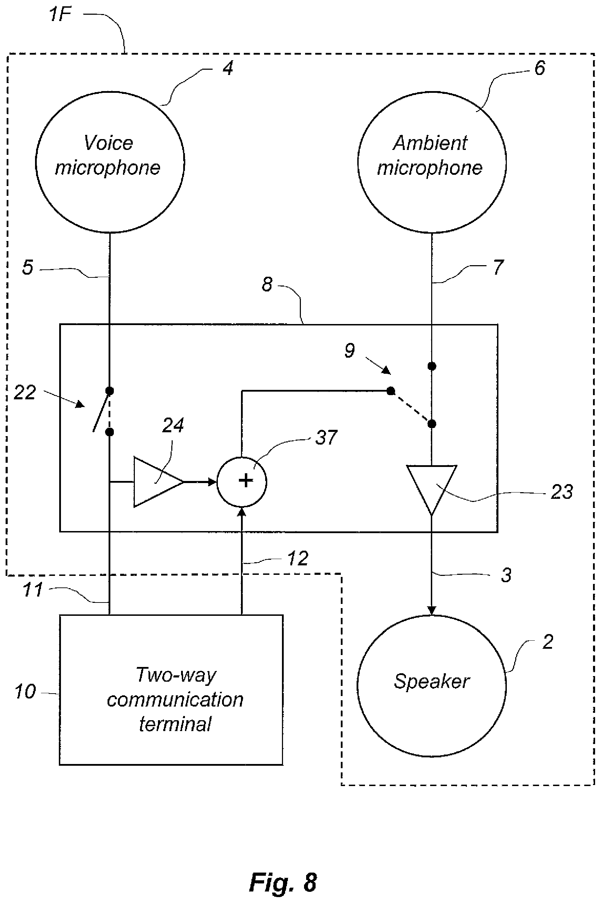

Figure 8 is a schematic diagram of a headset system 1F in ambient mode. This headset system differs from the one shown in figures 5 and 6 by having a so-called "sidetone" feature. This means that the user can hear his own voice picked up by the voice microphone 4 during two-way communications. The voice signal 5 is via a voice signal amplifier 24 directed to an input of an adder 37 and thereby added to the input signal 12.

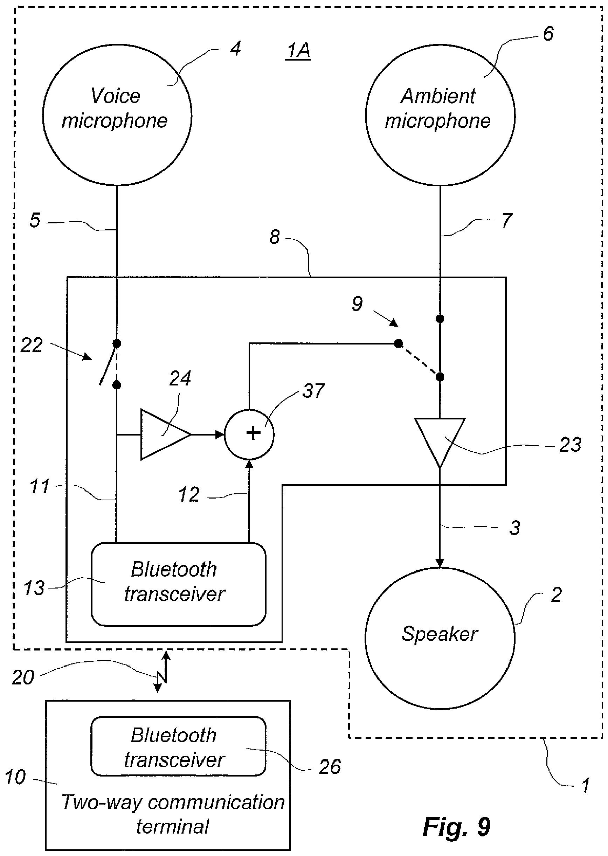

Figure 9 is a schematic diagram of the headset system 1A in which the connection between the earphone 15 and the two-way communication device 10 is provided by a Bluetooth link 20. In order to obtain this, the headset 1A comprises a first Bluetooth transceiver 13 while the two-way communication device 10 comprises a second Bluetooth transceiver 26.
The embodiments shown here are only examples of the invention. In all embodiments, the mode switch can be manual or automatic. Also, if automatic, the user may be able to override, so that he during a call temporary can listen to ambient sounds before returning to the call. The automatic switching can be obtained by a small relay, that detects when there is an input signal 12 of certain strength.

**List of reference signs:**

| | | | |
|---|---|---|---|
| 1 | headset system | 19 | microphone boom |
| 2 | speaker | 20 | Bluetooth link |
| 3 | speaker signal | 21 | user interface |
| 4 | voice microphone | 22 | voice signal switch |
| 5 | voice signal | 23 | speaker amplifier |
| 6 | ambient microphone | 24 | voice signal amplifier |
| 7 | ambient sound signal | 25 | headset cord |
| 8 | control circuit | 26 | headset buttons |
| 9 | mode switching circuit | 27 | headset base |
| 10 | two-way communication device | 28 | DECT link |
| 11 | output signal | 29 | computer with softphone |
| 12 | input signal | 30 | wire |
| 13 | headset Bluetooth transceiver | 31 | user |
| 14 | two-way communication terminal Bluetooth transceiver | 32 | end piece |
| | | 33 | headset |
| 15 | earphone | 34 | headset cradle |
| 16 | body worn headset housing | 35 | charging contacts |
| 17 | headband | 36 | headset |
| 18 | ear pad | 37 | adder |

## Claims

1. A communication headset system (1) for connecting to a two-way communication device (10), said communication headset system (1) comprising
an earphone (15) with a speaker (2) for receiving a speaker signal (3) and converting it into speaker sound,
a voice microphone (4) for receiving a user's voice and converting it into a voice signal (5),
an ambient microphone (6), arranged at a distance from the voice microphone (4), for receiving ambient sound and converting it into an ambient sound signal (7),
a control circuit (8) for receiving the ambient sound signal (7) and an input signal (12) from the two-way communication device (10), and for transmitting the speaker signal (3) to the speaker (2),
wherein the control circuit (8) comprises a mode switching circuit (9) for switching the headset system between an ambient mode in which the speaker signal (3) comprises the ambient sound signal (7) and not the input signal (12) and a communication mode in which the speaker signal (3) comprises the input signal (12) and not the ambient sound signal (7),
**characterised in that**
the mode switching circuit (9) switches the voice microphone (4) off when switching from the communication mode to the ambient mode.

2. A communication headset system (1) according to claim 1, wherein the control circuit (8) is adapted to transmit an output signal (11) comprising the voice signal (5) to the two-way communication device (10) in the communication mode.

3. A communication headset system (1) according to claim 1 or 2, wherein a user interface (21) is provided for switching between the ambient mode and the communication mode.

4. A communication headset system (1) according to any of the claims 1-3, wherein the control circuit (8) is adapted to automatically enter the communication mode when it receives an input signal (12) from the two-way communication device (10).

5. A communication headset system (1) according to any of the preceding claims, comprising a first earphone (15A) and a second earphone (16B).

6. A communication headset system (1) according to claim 5, wherein the first earphone (15A) and the second earphone (16B) are interconnected by a headband (17) or a neckband.

7. A communication headset system (1) according to any of the preceding claims, wherein the communication headset system (1) comprises a headset housing (15; 16; 27), which comprises the ambient microphone (6).

8. A communication headset system (1) according to claim 7, wherein the headset housing (16; 27) is separate from the earphones (15A, 15B).

9. A communication headset system (1) according to claim 8, wherein the headset housing is a body worn housing (16).

10. A communication headset system (1) according to claim 8, wherein the headset housing is a headset base (27) adapted to be placed on a surface, such as a desktop or a wall, during use.

11. A communication headset system (1) according to any of the claims 1-7, wherein an earphone (15) comprises the ambient microphone (6).

12. A communication headset system (1) according to claim 5 and claim 11, wherein each of the first earphone (15A) and the second earphone (15B) comprises an ambient microphone (6).

13. A communication headset system (1) according to any of the preceding claims, wherein the voice microphone (4) is arranged on a microphone boom (19).

14. A communication headset system (1) according to any of the preceding claims, wherein the control circuit is (8) is adapted to add the voice signal (5) to the speaker signal (3) in the communication mode.

15. A communication headset system (1) according to any of the preceding claims, wherein the ambient microphone or microphones (6) is/are omnidirectional.

16. A communication headset system according to any of the preceding claims, wherein the mode switching circuit (9) further comprises a voice signal switch (22) operatively connected to the mode switching circuit (9) so that the voice signal (5) is automatically switched off from the output signal (11), when the headset system is in the ambient mode.

## Patentansprüche

1. Kommunikations-Headset-System (1) zum Verbinden mit einer Zwei-Wege-Kommunikationseinrichtung (10), welches Kommunikations-Headset-System (1) Folgendes umfasst
einen Kopfhörer (15) mit einem Lautsprecher (2) zum Empfangen eines Lautsprechersignals (3) und Umwandeln davon in ein Lautsprechergeräusch, ein Stimmenmikrofon (4) zum Empfangen der Stimme eines Benutzers und Umwandeln davon in ein Stimmensignal (5),
ein Umgebungsmikrofon (6), das in einem Abstand vom Stimmenmikrofon (4) angeordnet ist, zum Empfangen von Umgebungsgeräusch und Umwandeln davon in ein Umgebungsgeräuschsignal (7),
einen Steuerkreis (8) zum Empfangen des Umgebungsgeräuschsignals (7) und eines Eingangssignals (12) von der Zwei-Wege-Kommunikationseinrichtung (10) und zum Übertragen des Lautsprechersignals (3) zum Lautsprecher (2),
wobei der Steuerkreis (8) einen Modusschaltkreis (9) umfasst zum Schalten des Headset-systems zwischen einem Umgebungsmodus, worin das Lautsprechersignal (3) das Umgebungsgeräuschsignal (7) und nicht das Eingangssignal (12) umfasst, und einem Kommunikationsmodus, worin das Lautsprechersignal (3) das Eingangssignal (12) und nicht das Umgebungsgeräuschsignal (7) umfasst,
**dadurch gekennzeichnet, dass** der Modusschaltkreis (9) beim Schalten vom Kommunikationsmodus zum Umgebungsmodus das Stimmenmikrofon (4) ausschaltet.

2. Kommunikations-Headset-System (1) nach Anspruch 1, wobei der Steuerkreis (8) dafür eingerichtet ist, ein Ausgangssignal (11) umfassend das Stimmensignal (5) an die Zwei-Wege-Kommunikationseinrichtung (10) in Kommunikationsmodus zu übertragen.

3. Kommunikations-Headset-System (1) nach Anspruch 1 oder 2, wobei eine Benutzerschnittstelle (21) zum Schalten zwischen dem Umgebungsmodus und dem Kommunikationsmodus bereitgestellt ist.

4. Kommunikations-Headset-System (1) nach einem der Ansprüche 1-3, wobei der Steuerkreis (8) dafür eingerichtet ist, in den Kommunikationsmodus automatisch einzutreten, wenn er ein Eingangssignal (12) von der Zwei-Wege-Kommunikationseinrichtung (10) empfängt.

5. Kommunikations-Headset-System (1) nach einem der vorgehenden Ansprüche, umfassend einen ersten Kopfhörer (15A) und einen zweiten Kopfhörer (16B).

6. Kommunikations-Headset-System (1) nach Anspruch 5, wobei der erste Kopfhörer (15A) und der zweite Kopfhörer (16B) durch ein Kopfband (17) oder ein Halsband miteinander verbunden sind.

7. Kommunikations-Headset-System (1) nach einem der vorgehenden Ansprüche, wobei das Kommunikations-Headset-System (1) ein Headset-Gehäuse (15; 16; 27) umfasst, das das Umgebungsmikrofon (6) umfasst.

8. Kommunikations-Headset-System (1) nach Anspruch 7, wobei das Headset-Gehäuse (16; 27) von den Kopfhörern (15A, 15B) getrennt ist.

9. Kommunikations-Headset-System (1) nach Anspruch 8, wobei das Headset-Gehäuse ein Gehäuse (16) ist, das am Körper getragen wird.

10. Kommunikations-Headset-System (1) nach Anspruch 8, wobei das Headset-Gehäuse eine Headset-Basis (27) ist, die dafür eingerichtet ist, während der Anwendung auf einer Oberfläche, wie beispielsweise einer Arbeitsfläche oder einer Wand, angeordnet zu werden.

11. Kommunikations-Headset-System (1) nach einem der Ansprüche 1-7, wobei ein Kopfhörer (15) das Umgebungsmikrofon (6) umfasst.

12. Kommunikations-Headset-System (1) nach Anspruch 5 und 11, wobei der erste Kopfhörer (15A) und der zweite Kopfhörer (15B) jeweils ein Umgebungsmikrofon (6) umfasst.

13. Kommunikations-Headset-System (1) nach einem der vorgehenden Ansprüche, wobei das Stimmenmikrofon (4) an einem Mikrofonarm (19) angeordnet ist.

14. Kommunikations-Headset-System (1) nach einem der vorgehenden Ansprüche, wobei der Steuerkreis (8) dafür eingerichtet ist, in Kommunikationsmodus das Stimmensignal (5) zu dem Lautsprechersignal (3) hinzuzufügen.

15. Kommunikations-Headset-System (1) nach einem der vorgehenden Ansprüche, wobei das Umgebungsmikrofon oder die Umgebungsmikrofone (6) ungerichtet ist bzw. sind.

16. Kommunikations-Headset-System nach einem der vorgehenden Ansprüche, wobei der Modusschaltkreis (9) weiter einen Stimmensignalschalter (22) umfasst, der mit dem Modusschaltkreis (9) operativ verbunden ist, so dass das Stimmensignal (5) vom Ausgangssignal (11) automatisch ausgeschaltet wird, wenn das Headset-System im Umgebungsmodus ist.

## Revendications

1. Système de casque de communication (1) pour se connecter à un dispositif de communication bidirectionnel (10), ledit système de casque de communication (1) comprenant
un écouteur (15) avec un haut-parleur (2) pour recevoir un signal de haut-parleur (3) et le convertir en un son de haut-parleur,
un microphone vocal (4) pour recevoir la voix d'un utilisateur et le convertir en un signal vocal (5),
un microphone ambiant (6), disposé à distance du microphone vocal (4), pour recevoir un son ambiant et le convertir en un signal sonore ambiant (7),
un circuit de commande (8) pour recevoir le signal sonore ambient (7) et un signal d'entrée (12) venant du dispositif de communication bidirectionnel (10), et pour transmettre le signal de haut-parleur (3) au haut-parleur (2),
le circuit de commande (8) comprend un circuit de commutation de mode (9) pour commuter le système de casque entre un mode ambiant dans lequel le signal de haut-parleur (3) comprend le signal sonore ambiant (7) et non pas le signal d'entrée (12) et un mode de communication dans lequel le signal de haut-parleur (3) comprend le signal d'entrée (12) et non pas le signal sonore ambiant (7),
**caractérisé en ce que** le circuit de commutation de mode (9) interrompt le microphone vocal (4) lorsqu'il commute du mode de communication au mode ambient.

2. Système de casque de communication (1) selon la revendication 1, lorsque le circuit de commande (8) est adapté pour transmettre un signal de sortie (11) comprenant le signal vocal (5) au dispositif de communication bidirectionnel (10) en mode de communication.

3. Système de casque de communication (1) selon la revendication 1 ou 2, dans lequel une interface utilisateur (21) est prévue pour commuter entre le mode ambiant et le mode de communication.

4. Système de casque de communication (1) selon l'une quelconque des revendications 1 à 3, dans lequel le circuit de commande (8) est adapté pour entrer automatiquement dans le mode de communication lorsqu'il reçoit un signal d'entrée (12) venant du dispositif de communication bidirectionnel (10).

5. Système de casque de communication (1) selon l'une quelconque des revendications précédentes, comprenant un premier écouteur (15A) et un deuxième écouteur (16B).

6. Système de casque de communication (1) selon la revendication 5, dans lequel le premier écouteur (15A) et le deuxième écouteur (16B) sont inter-connectés par un bandeau (17) ou une bande de col.

7. Système de casque de communication (1) selon l'une quelconque des revendications précédentes, dans lequel le système de casque de communication (1) comprend un boîtier de casque (15; 16; 27), qui comprend le microphone ambiant (6).

8. Système de casque de communication (1) selon la revendication 7, dans lequel le boîtier de casque (16; 27) est séparé des écouteurs (15A, 15B).

9. Système de casque de communication (1) selon la revendication 8, dans lequel le boîtier de casque est un boîtier porte sur le corps (16).

10. Système de casque de communication (1) selon la revendication 8, dans lequel le boîtier de casque est un casque de base (27) adapté pour être placé sur une surface, telle qu'un bureau ou une paroi, pendant l'utilisation.

11. Système de casque de communication (1) selon l'une quelconque des revendications 1 à 7, dans lequel un écouteur (15) comprend le microphone ambiant (6).

12. Système de casque de communication (1) selon la revendication 5 et la revendication 11, dans lequel chacun du premier écouteur (15A) et du deuxième écouteur (15B) comprend un microphone ambiant (6).

13. Système de casque de communication (1) selon l'une quelconque des revendications précédentes, dans lequel le microphone vocal (4) est disposé sur une ramone de microphone (19).

14. Système de casque de communication (1) selon l'une quelconque des revendications précédentes, dans lequel le circuit de commande (8) est adapté pour ajouter le signal vocal (5) au signal de haut-parleur (3) dans le mode de communication.

15. Système de casque de communication (1) selon l'une quelconque des revendications précédentes, dans lequel le(s) microphone(s) ambiant(s) (6) est(sont) omnidirectionnel(s).

16. Système de casque de communication selon l'une quelconque des revendications précédentes, dans lequel le circuit de commutation de mode (9) comprend en outre un commutateur de signal vocal (22) connecté de manière fonctionnelle au circuit de commutation de mode (9) si bien que le signal vocal (5) est automatiquement interrompu du signal de sortie (11), lorsque le système de casque est dans un mode ambient.
